# EUROPEAN PATENT APPLICATION

(11) **EP 4 615 044 A1**
(43) Date of publication of application: **10.09.2025**
(21) Application number: 22963930.7
(22) Date of filing: 03.11.2022
(51) Int. Cl.: H04W 28/02

(54) **METHOD AND APPARATUS FOR REPORTING DELAY INFORMATION**

(71) Applicant: FUJITSU LIMITED, Kawasaki-shi, Kanagawa 211-8588 (JP)
(72) Inventor: LI, Guorong, Beijing 100022 (CN); YI, Su, Beijing 100022 (CN); WANG, Xin, Beijing 100022 (CN)
(74) Representative: Haseltine Lake Kempner LLP
(86) International application number: PCT/CN2022/129560
(87) International publication number: WO 2024/092619

(57) **Abstract**

Embodiments of the present disclosure provide a method and an apparatus for reporting delay information, the method comprising: a terminal equipment determines a remaining time to be reported; the terminal equipment transmits a delay information report to a network device, the delay information report including the remaining time to be reported. Thereby, it helps the terminal equipment to timely transmit the delay information report to the network device, in addition, the network device may timely allocate appropriate uplink resources for transmission of an XR service according to contents of the delay information report, which helps meeting latency requirements of the XR services, thereby ensuring QoS of the XR service, and may further improve a utilization rate of a wireless resource.

## Description

### TECHNICAL FIELD

Embodiments of the present disclosure relate to the technical field of communications.

### BACKGROUND ART

3GPP (3rd Generation Partnership Project) begins to study enhancements for Extended Reality (XR) service in Release 18 (version), and the XR service refers to environment and human-computer interaction of all real and virtual combinations produced by computer technologies and wearable devices. The XR service may include virtual reality (VR) service, augmented reality (AR) service and mixed reality (MR) service.

It should be noted that the above introduction to the technical background is just to facilitate a clear and complete description of the technical solutions of the present disclosure, and is elaborated to facilitate understanding of persons skilled in the art. It cannot be considered that these technical solutions are known by persons skilled in the art just because these solutions are elaborated in the Background Art of the present disclosure.

### SUMMARY

The inventor finds that some concepts are introduced in XR study, such as a PDU set (PDU group or PDU set) and a PSDB (PDU-set delay budget). A PDU set consists of one or more protocol data units (PDUs) that carry a payload of a piece of unit information generated by an application layer, such as a frame of service or video slice. The PSDB is a delay budget of a PDU set or PDU set type (for example, PDU sets with the same QoS characteristic parameters serve as a PDU set type), and is semi-static information provided by a core network.

Assuming that a UE (user equipment) dynamically reports delay information to a network via a BSR (buffer status report), on the one hand, the triggering of the BSR is related to uplink data in a logical channel, a priority of the logical channel is taken into account, latency requirements or delay information of the uplink data carried in the logical channel are not taken into account, it is possible that the XR service exceeds its latency requirements but the BSR is not triggered to request uplink resources. As a result, quality of service (QoS) requirements of the XR service are not met or data is lost, leading to a decline in user experience. On the other hand, contents of the BSR include an identifier or index of a logical channel group (LCG), and a buffer size (that is, a total amount of data available for all logical channels in at least one logical channel group). It may be seen that currently, the BSR does not yet support reporting delay information, cannot distinguish how much data is buffered by a delay value, so it cannot reach the requirements of 3GPP on delay information report.

For at least one of the above problems or other similar problems, the embodiments of the present disclosure provide a method and an apparatus for reporting delay information, to meet latency requirements of the XR service, thereby ensuring QoS of the XR service.

According to an aspect of the embodiments of the present disclosure, an apparatus for reporting delay information is provided, configured in a terminal equipment, the apparatus comprising:
a determining unit configured to determine a remaining time to be reported; and
a transmitting unit configured to transmit a delay information report to a network device, the delay information report including the remaining time to be reported.

According to another aspect of the embodiments of the present disclosure, a configuration apparatus is provided, configured in a network device, the apparatus comprising:
a configuring unit configured to transmit configuration information to a terminal equipment, the configuration information including information on a remaining time period, the information on the remaining time period being used for the terminal equipment to determine a remaining time to be reported.

One of advantageous effects of the embodiments of the present disclosure lies in: according to the embodiments of the present disclosure, a terminal equipment determines a remaining time to be reported, and timely triggers a delay information report containing the remaining time to be reported, which helps the terminal equipment to timely transmit the delay information report to the network device, in addition, the network device may timely allocate appropriate uplink resources for transmission of an XR service according to contents of the delay information report, which helps meeting latency requirements of the XR services, thereby ensuring QoS of the XR service, and may further improve a utilization rate of a wireless resource.

Referring to the later description and drawings, specific implementations of the present disclosure are disclosed in detail, indicating a mode that the principle of the present disclosure may be adopted. It should be understood that the implementations of the present disclosure are not limited in terms of a scope. Within the scope of the terms of the attached claims, the implementations of the present disclosure include many changes, modifications and equivalents.

Features that are described and/or shown for one implementation may be used in the same way or in a similar way in one or more other implementations, may be combined with or replace features in the other implementations.

It should be emphasized that the term "comprise/include" when being used herein refers to presence of a feature, a whole piece, a step or a component, but does not exclude presence or addition of one or more other features, whole pieces, steps or components.

### BRIEF DESCRIPTION OF DRAWINGS

An element and a feature described in a drawing or an implementation of the embodiments of the present disclosure may be combined with an element and a feature shown in one or more other drawings or implementations. In addition, in the drawings, similar labels represent corresponding components in several drawings and may be used to indicate corresponding components used in more than one implementation.
FIG. 1 is a schematic diagram of a relation among a PDU set, a QoS flow, a DRB and an LCH;
FIG. 2 is a schematic diagram of buffer in a PDCP entity and its corresponding RLC entity;
FIG. 3 is a schematic diagram of a method for reporting delay information in the embodiments of the present disclosure;
FIG. 4 is a schematic diagram of a MAC CE format of a delay information report;
FIG. 5 is another schematic diagram of a MAC CE format of a delay information report;
FIG. 6 is a further schematic diagram of a MAC CE format of a delay information report;
FIG. 7 is another schematic diagram of a MAC CE format of a delay information report;
FIG. 8 is a schematic diagram of a configuration method in the embodiments of the present disclosure;
FIG. 9 is a schematic diagram of an example of an apparatus for reporting delay information in the embodiments of the present disclosure;
FIG. 10 is a schematic diagram of an example of a configuration apparatus in the embodiments of the present disclosure;
FIG. 11 is a schematic diagram of a terminal equipment in the embodiments of the present disclosure;
FIG. 12 is a schematic diagram of a network device in the embodiments of the present disclosure.

### DETAILED DESCRIPTION

Referring to the drawings, through the following Specification, the aforementioned and other features of the present disclosure will become obvious. The Specification and the drawings specifically disclose particular implementations of the present disclosure, showing partial implementations which may adopt the principle of the present disclosure. It should be understood that the present disclosure is not limited to the described implementations, on the contrary, the present disclosure includes all the modifications, variations and equivalents falling within the scope of the attached claims.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include", "comprise" and "have", etc. refer to the presence of stated features, elements, members or components, but do not preclude the presence or addition of one or more other features, elements, members or components.

In the embodiments of the present disclosure, the singular forms "a/an" and "the", etc. include plural forms, and should be understood broadly as "a kind of" or "a type of", but are not defined as the meaning of "one"; in addition, the term "the" should be understood to include both the singular forms and the plural forms, unless the context clearly indicates otherwise. In addition, the term "according to" should be understood as "at least partially according to......", the term "based on" should be understood as "at least partially based on......", unless the context clearly indicates otherwise.

In the embodiments of the present disclosure, the term "a communication network" or "a wireless communication network" may refer to a network that meets any of the following communication standards, such as Long Term Evolution (LTE), LTE- Advanced (LTE-A), Wideband Code Division Multiple Access (WCDMA), High-Speed Packet Access (HSPA) and so on.

And, communication between devices in a communication system can be carried out according to a communication protocol at any stage, for example may include but be not limited to the following communication protocols: 1G (generation), 2G, 2.5G, 2.75G, 3G, 4G, 4.5G, 5G, New Radio (NR) and so on, and/or other communication protocols that are currently known or will be developed in the future.

In the embodiments of the present disclosure, the term "a network device" refers to, for example, a device that accesses a terminal equipment in a communication system to a communication network and provides services to the terminal equipment. The network device may include but be not limited to the following devices: a Base Station (BS), an Access Point (AP), a Transmission Reception Point (TRP), a broadcast transmitter, a Mobile Management Entity (MME), a gateway, a server, a Radio Network Controller (RNC), a Base Station Controller (BSC) and so on.

The base station may include but be not limited to: node B (NodeB or NB), evolution node B (eNodeB or eNB) and a 5G base station (gNB), etc., and may further includes Remote Radio Head (RRH), Remote Radio Unit (RRU), a relay or a low power node (such as femeto, pico, etc.), an Integrated Access and Backhaul (IAB) node or an IAB-DU or IAB-donor. And the term "base station" may include some or all functions of a base station, each base station may provide communication coverage to a specific geographic region. The term "cell" may refer to a base station and/or its coverage area, which depends on the context in which this term is used. In a case where there is no confusion, the terms "cell" and " base station " are interchangeable.

In the embodiments of the present disclosure, the term "User Equipment (UE)" or "Terminal Equipment (TE) or Terminal Device" refers to, for example, a device that accesses a communication network and receives network services through a network device. The terminal equipment can be fixed or mobile, and can also be referred to as Mobile Station (MS), a terminal, Subscriber Station (SS), Access Terminal (AT), IAB-MT (Mobile Terminal), a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera, a wearable device and so on.

For another example, under a scenario such as Internet of Things (IoT), the terminal equipment may also be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

Moreover, the term "a network side" or "a network device side" refers to a side of a network, may be a base station, and may include one or more network devices as described above. The term "a user side" or "a terminal side" or "a terminal equipment side" refers to a side of a user or terminal, may be a UE, and may include one or more terminal equipments as described above. If it is not specifically mentioned herein, "a device" may refer to a network device, or may refer to a terminal equipment.

In MAC (Media Access Control) Specification, for triggering of a BSR, there is the following description:

| | |
|---|---|
| A BSR shall be triggered if any of the following events occur: | |
| - UL data, for a logical channel which belongs to an LCG, becomes available to the MAC entity; and either | |
| | - this UL data belongs to a logical channel with higher priority than the priority of any logical channel containing available UL data which belong to any LCG; or |
| | - none of the logical channels which belong to an LCG contains any available UL data. |
| | in which case the BSR is referred below to as 'Regular BSR'; |
| - UL resources are allocated and number of padding bits is equal to or larger than the size of the Buffer Status Report MAC CE plus its subheader, in which case the BSR is referred below to as 'Padding BSR'; | |
| *- retxBSR-Timer* expires, and at least one of the logical channels which belong to an LCG contains UL data, in which case the BSR is referred below to as 'Regular BSR'; | |
| *- periodicBSR-Timer* expires, in which case the BSR is referred below to as 'Periodic BSR'. | |
| NOTE 1: When Regular BSR triggering events occur for multiple logical channels simultaneously, each logical channel triggers one separate Regular BSR. | |

Moreover, in the MAC Specification, for the contents of the BSR, there is the following description:

| | |
|---|---|
| The fields in the BSR MAC CE are defined as follows: | |
| | - LCG ID: The Logical Channel Group ID field identifies the group of logical channel(s) whose buffer status is being reported. The length of the field is 3 bits; |
| | - LCGᵢ: For the Long BSR format and Pre-emptive BSR format, this field indicates the presence of the Buffer Size field for the logical channel group i. The LCGᵢ field set to 1 indicates that the Buffer Size field for the logical channel group I is reported. The LCGᵢ field set to 0 indicates that the Buffer Size field for the logical channel group i is not reported. For the Long Truncated BSR format, this field indicates whether logical channel group i has data available. The LCGᵢ field set to 1 indicates that logical channel group i has data available. The LCGᵢ field set to 0 indicates that logical channel group i does not have data available; |
| | - Buffer Size: The Buffer Size field identifies the total amount of data available according to the data volume calculation procedure in TSs 38.322 [3] and 38.323 [4] across all logical channels of a logical channel group after the MAC PDU has been built (i.e. after the logical channel prioritization procedure, which may result the value of the Buffer Size field to zero). The amount of data is indicated in number of bytes. The size of the RLC headers and MAC subheaders are not considered in the buffer size computation. The length of this field for the Short BSR format and the Short Truncated BSR format is 5 bits. The length of this field for the Long BSR format and the Long Truncated BSR format is 8 bits. The values for the 5-bit and 8-bit Buffer Size fields are shown in Tables 6.1.3.1-1 and 6.1.3.1-2, respectively. For the Long BSR format and the Long Truncated BSR format, the Buffer Size fields are included in ascending order based on the LCGᵢ. For the Long Truncated BSR format the number of Buffer Size fields included is maximised, while not exceeding the number of padding bits. For the Pre-emptive BSR format, the Buffer Size field identifies the total amount of the data expected to arrive at the IAB-MT of the node where the Pre-emptive BSR is triggered and does not include the volume of data currently available in the IAB-MT. Pre-emptive BSR format is identical to the Long BSR format. |

In the embodiments of the present disclosure, the terminal equipment transmits a delay information report to the network device, the delay information report may be transmitted via a BSR MAC CE or via other MAC CEs, the present disclosure does not limit in this regard.

In the embodiments of the present disclosure, it is assumed that data volumes of a PDCP (Packet Data Convergence Protocol) layer and a RLC (Radio Link Control) layer are still counted into the total amount (or buffer size) of data available included in the delay information report.

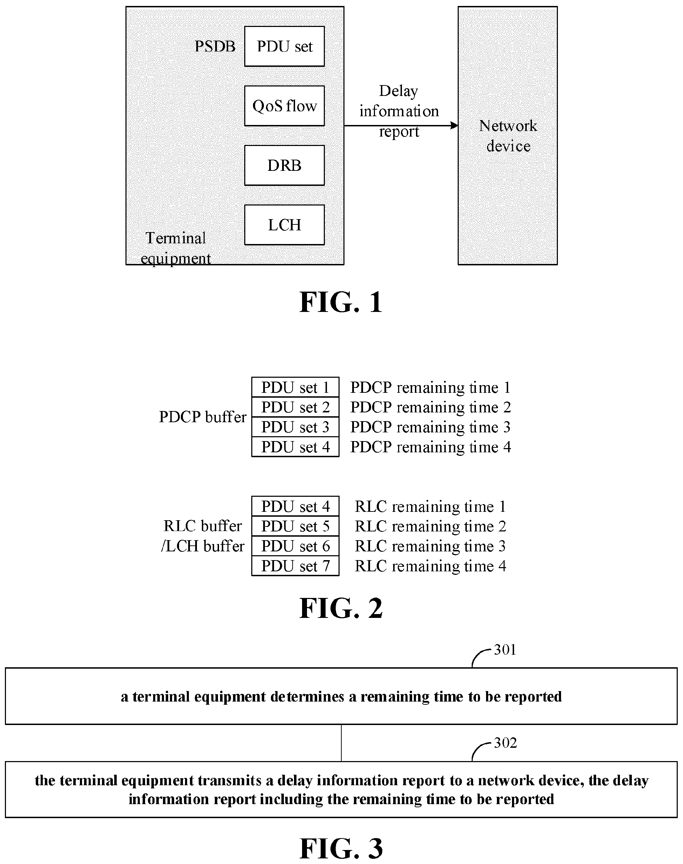

FIG. 1 is a schematic diagram of a relation among a PDU set, a QoS flow, a DRB (Data Radio Bearer) and an LCH (logical channel). As shown in FIG. 1, In a UE, a PDU set of the XR service has its associated PSDB, the PSDB may be notified by a core network to the UE, a NAS (Non-Access Stratum) layer processes mapping from a PDU set type to the QoS flow, an AS (Access Stratum) layer processes mapping from the QoS flow to the DRB. One-to-one mapping or many-to-one mapping may be adopted between the PDU type in the NAS and the QoS flow, one-to-one mapping or many-to-one or one-to-many mapping may be adopted between the QoS flow in the AS and the DRB, the present disclosure is not limited to this. In a network, the core network may configure a PSDB of at least one PDU set (type) of the XR service of the UE to the network device, for example configure a PSDB of a PDU set (type) of an uplink service and/or a PSDB of a PDU set (type) of a downlink service; or, the core network may configure a PSDB of a PDU (type) corresponding to at least one QoS flow of the UE to the network device, the QoS flow may be an uplink QoS flow and/or a downlink QoS flow.

FIG. 2 is a schematic diagram of buffer in a PDCP entity and its corresponding RLC entity. As shown in FIG. 2, in the embodiments of the present disclosure, at least one XR service may be established in the UE, so at least one DRB (corresponding to at least one PDCP entity, at least one RLC entity and at least one LCH) is established. The PDCP entity corresponding to one DRB has a buffer, which may buffer data from PDU set 1 to PDU set 4; the RLC entity corresponding to the DRB/PDCP entity may buffer data from PDU set 4 to PDU set 7, the DRB/PDCP entity/RLC entity correspond(s) to a logical channel.

The embodiments of the present disclosure are described below in conjunction with the drawings and the specific implementations.

In the following description, without causing confusion, "if..." may be replaced with "in a case where" or" when..."; "a remaining time of a PDCP layer" and "a remaining time of a PDU set at the PDCP layer" are interchangeable; "a remaining time of a RLC layer" and "a remaining time of a PDU set at the RLC layer" are interchangeable; "a data volume of a PDCP layer" and "a data volume of a PDU set at the PDCP layer" are interchangeable; "a data volume of a RLC layer" and "a data volume of a PDU set at the RLC layer" are interchangeable.

### Embodiments of a first aspect

Embodiments of the present disclosure provide a method for reporting delay information, which is described from a terminal equipment side.

FIG. 3 is a schematic diagram of a method for reporting delay information in the embodiments of the present disclosure. As shown in FIG. 3, the method includes:
301: a terminal equipment determines a remaining time to be reported; and
302: the terminal equipment transmits a delay information report to a network device, the delay information report including the remaining time to be reported.

It should be noted that the above FIG. 3 only schematically describes the embodiments of the present disclosure, but the present disclosure is not limited to this. For example, some other operations can be increased or operations therein may be reduced. Persons skilled in the art may make appropriate modifications according to the above contents, not limited to the records in the above FIG. 3.

According to the above embodiments, a terminal equipment determines a remaining time to be reported, and transmits a delay information report containing the remaining time to be reported to a network device, which helps the terminal equipment to timely transmit the delay information report to the network device, in addition, the network device may timely allocate appropriate uplink resources for transmission of an XR service according to contents of the delay information report, which helps meeting latency requirements of the XR services, thereby ensuring QoS of the XR service, and may further improve a utilization rate of a wireless resource.

In 301, in some embodiments, a MAC layer of the terminal equipment determines the remaining time to be reported according to a remaining time of a PDCP layer and/or a remaining time of an RLC layer.

In the above embodiments, the remaining time of the PDCP layer may be indicated by the PDCP layer of the terminal equipment, and the remaining time of the RLC layer may be indicated by the RLC layer of the terminal equipment. For example, the PDCP layer of the terminal equipment notifies the MAC layer of the remaining time of the PDCP layer, and the RLC layer of the terminal equipment notifies the MAC layer of the remaining time of the RLC layer. Thereby, the MAC layer of the terminal equipment may determine the remaining time to be reported according to the remaining time of the PDCP layer and/or the remaining time of the RLC layer.

In the above embodiments, the lower layer of the PDCP layer is the RLC layer, and the lower layer of the RLC layer is the MAC layer. In order to facilitate for the RLC layer to determine the remaining time of the RLC layer and to facilitate for the MAC layer to determine the remaining time to be reported, the PDCP layer of the terminal equipment may further notify the RLC layer of the remaining time of the PDCP layer, the RLC layer determines the remaining time of the RLC layer according to the remaining time of the PDCP layer and a buffer time of the RLC layer. In addition, the RLC layer may further notify the remaining time of the PDCP layer and the remaining time of the RLC layer to the MAC layer.

In the above embodiments, the remaining time of the PDCP layer and/or the remaining time of the RLC layer may be a remaining time of a PDU set at the PDCP layer and/or a remaining time of the PDU set at the RLC layer.

In some embodiments, the remaining time to be reported refers to at least one of the following:
a remaining time of the PDCP layer of the terminal equipment;
a remaining time of the RLC layer of the terminal equipment;
a minimum value in the remaining time of the PDCP layer of the terminal equipment and the remaining time of the RLC layer of the terminal equipment;
an identifier or index of a remaining time period;
a minimum value in remaining times of PDU sets included in a logical channel at the PDCP layer of the terminal equipment; and
a minimum value in remaining times of PDU sets included in a logical channel at the RLC layer of the terminal equipment.

In the above embodiments, the remaining time of the PDCP layer of the terminal equipment may be the PSDB corresponding to the PDU set subtracted by buffer time of the PDU set at the PDCP layer; the remaining time of the RLC layer of the terminal equipment may be the PSDB corresponding to the PDU set subtracted by buffer time of the PDU set at the PDCP layer, then subtracted by buffer time of the PDU set at the RLC layer, or the remaining time of the PDCP layer subtracted by the buffer time of the RLC layer.

In the above embodiments, a remaining time period may be configured by the network device. For example, the network device configures at least one remaining time period, one remaining time period is represented by a range of a time period and its corresponding identifier or index, or, the remaining time period may be predefined, thereby the terminal equipment implicitly indicates a remaining time to be reported by reporting the identifier or index of the remaining time period.

In the above embodiments, the logical channel refers to a logical channel corresponding to the DRB and/or PDCP entity and/or RLC entity, the logical channel may include data from one PDU set, or may further include data from more than one PDU set.

In some embodiments, the remaining time to be reported may be a minimum value in remaining time of PDU sets included in a logical channel at the PDCP layer. For example, the logical channel includes four PDU sets, respectively being PDU set 1 to PDU set 4, the remaining time of the PDU set 1 at the PDCP layer is t1, the remaining time of the PDU set 2 at the PDCP layer is t2, the remaining time of the PDU set 3 at the PDCP layer is t3, and the remaining time of the PDU set 4 at the PDCP layer is t4, the remaining time to be reported may be a minimum value in t1 to t4.

In some embodiments, the remaining time to be reported may further be a minimum value in remaining times of PDU sets included in a logical channel at the RLC layer. For example, the logical channel includes four PDU sets, respectively being PDU set 4 to PDU set 7, the remaining time of the PDU set 4 at the RLC layer is t5, the remaining time of the PDU set 5 at the RLC layer is t6, the remaining time of the PDU set 6 at the RLC layer is t7, and the remaining time of the PDU set 7 at the RLC layer is t8, the remaining time to be reported may be a minimum value in t5 to t8.

In some embodiments, the terminal equipment may further determine a data volume to be reported corresponding to the remaining time to be reported. In this embodiment, the delay information report includes not only the remaining time to be reported, but also the data volume to be reported.

In some embodiments, the MAC layer of the terminal equipment may determine the data volume to be reported according to a data volume of the PDCP layer and/or a data volume of the RLC layer.

In the above embodiments, the data volume of the PDCP layer may be indicated by the PDCP layer of the terminal equipment, and the data volume of the RLC layer may be indicated by the RLC layer of the terminal equipment. For example, the PDCP layer of the terminal equipment notifies the MAC layer of the data volume of the PDCP layer, and the RLC layer of the terminal equipment notifies the MAC layer of the data volume of the RLC layer. Thereby, the MAC layer of the terminal equipment may determine the data volume to be reported according to the data volume of the PDCP layer and/or the data volume of the RLC layer.

In some embodiments, the delay information report further includes an identifier or index of a PDU set. That is, the delay information report includes the remaining time to be reported, the data volume to be reported, and the identifier or index of the PDU set.

In the above embodiments, the remaining times to be reported and the data volumes to be reported may be sorted according to the identifiers or indices of the PDU sets in ascending order or in descending order. The present application does not make limitations in this regard.

In the above embodiments, in some implementations, the data volume to be reported is: a data volume of a PDU set corresponding to a minimum first predetermined number of remaining times, in the remaining time of the PDCP layer and/or the remaining time of the RLC layer.

In the above embodiments, in some implementations, the remaining time to be reported is: a remaining time of a PDCP layer and/or a remaining time of an RLC layer of a PDU set associated with which the remaining time of the PDCP layer and/or the remaining time of the RLC layer is(are) lower than a first predetermined threshold; the data volume to be reported is: a data volume of a PDCP layer and/or a data volume of an RLC layer corresponding to the remaining time of the PDCP layer and/or the remaining time of the RLC layer.

In the above embodiments, in some implementations, the remaining time to be reported is: a remaining time of a PDCP layer and/or a remaining time of an RLC layer of a PDU set associated with which a data volume of the PDCP layer and/or a data volume of the RLC layer is(are) higher than a second predetermined threshold; the data volume to be reported is: a data volume of a PDCP layer and/or a data volume of an RLC layer corresponding to the remaining time of the PDCP layer and/or the remaining time of the RLC layer.

In the above embodiments, in some implementations, the remaining time to be reported is: a remaining time of a PDCP layer and/or a remaining time of an RLC layer of a PDU set associated with which the PDCP layer has a data volume; the data volume to be reported is: a data volume of a PDCP layer and/or a data volume of an RLC layer corresponding to the remaining time of the PDCP layer and/or the remaining time of the RLC layer.

The above thresholds (values of the first predetermined threshold and the second predetermined threshold) and the first predetermined number may be preset or configured by a network device, the present disclosure does not make limitations on their values.

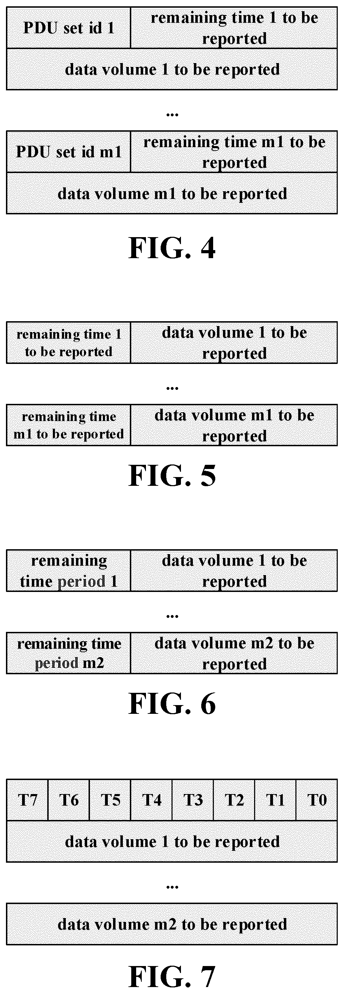

FIG. 4 is a schematic diagram of a MAC CE format of a delay information report in the above embodiments. As shown in FIG. 4, the MAC CE of the delay information report includes an identifier or index of a PDU set. In addition, the MAC CE of the delay information report further includes information on a remaining time to be reported and information on a data volume to be reported.

FIG. 5 is another schematic diagram of a MAC CE format of a delay information report in the above embodiments. As shown in FIG. 5, the MAC CE of the delay information report does not include an identifier or index of a PDU set, but only includes information on a remaining time to be reported and information on a data volume to be reported.

In the examples shown in FIG. 4 and FIG. 5, the number of bits occupied by the information on the remaining time to be reported and the information on the data volume to be reported may be the same or may be different. For example, the information on the remaining time to be reported occupies 3 bits, the information on the data volume to be reported occupies 5 bits; or, the information on the remaining time to be reported and the information on the data volume to be reported occupy 8 bits respectively, and so on.

In the examples shown in FIG. 4 and FIG. 5, as described above, the remaining times to be reported and the data volumes to be reported may be sorted according to the identifiers or indices of the PDU sets in ascending order or in descending order.

In the examples shown in FIG. 4 and FIG. 5, as described above, the data volume to be reported may be a data volume of a PDU set corresponding to current minimum 1 to m1 remaining times (m1 may be 1 or a positive integer greater than 1, may be predefined or configured by a network device), or may be a remaining time to be reported and a data volume to be reported of a PDU set associated with which remaining time is lower than a threshold, or may be a remaining time to be reported and a data volume to be reported of a PDU set associated with which data volume is higher than a threshold, or may be a remaining time to be reported and a data volume to be reported of a PDU set which has data, and so on.

In some embodiments, the data volume to be reported is a data volume of at least one PDU set corresponding to at least one remaining time period.

In the above embodiments, as described above, the remaining time period may be configured by a network device. For example, the terminal equipment receives configuration information transmitted by the network device, the configuration information including an index of at least one remaining time period and a corresponding time period range, a PDCP layer and/or RLC layer of the terminal equipment calculate(s) a sum of data volumes of PDU sets within the at least one remaining time period as a data volume to be reported.

In the above embodiments, as described above, the remaining time period may also be predefined. For example, a range of a remaining time corresponding to the identifier or index of the remaining time period is predefined. Table 1 is an example of pre-defined remaining time periods, the present disclosure is not limited to this.

**Table 1**

| Remaining time period index | Remaining time T |
|---|---|
| 0 | 0 ms ≤ T < 2ms |
| 1 | 2 ms ≤ T < 5 ms |
| 2 | 5ms ≤ T < 10 ms |
| 3 | 10 ms ≤ T < 20 ms |
| 4 | 20 ms ≤ T < 50 ms |
| 5 | 50 ms ≤ T < 100 ms |
| 6 | 100ms ≤ T < 200 ms |
| 7 | 200 ms ≤ T |

In the above embodiments, the terminal equipment may determine a remaining time period associated with which a data volume is reported according to a predetermined policy or rule, for example determines a remaining time period associated with which a data volume is reported according to that which remaining time period has data. The present disclosure is not limited to this, the terminal equipment may further determine a remaining time period associated with which a data volume is reported according to an indication of a network device or other conditions.

For example, the data volume to be reported may be: a data volume of a PDU set corresponding to a second predetermined number of remaining time periods with lowest (or highest) identifiers or indices of remaining time periods associated with which there is data to be transmitted; or, a data volume of a PDU set having data to be transmitted with a lower limit or an upper limit of a remaining time period lower than a third predetermined threshold; or, a data volume of a PDU set having data to be transmitted with a data volume greater than a fourth predetermined threshold; or, a data volume of a PDU set corresponding to a third predetermined number of remaining time periods with lowest (or highest) identifiers or indices of remaining time periods; or, a data volume of a PDU set with a lower limit or an upper limit of a remaining time period lower than a fifth predetermined threshold.

In some embodiments, the delay information report further includes an identifier or index of at least one remaining time period. That is, the delay information report includes the remaining time to be reported, the data volume to be reported, and an identifier or index of at least one remaining time period.

In the above embodiments, the data volume to be reported may be a data volume of at least one PDU set corresponding to at least one remaining time period, such as a data volume of a PDCP entity; or, a data volume of an RLC entity; or, a sum of a data volume of a PDCP entity and a data volume of an RLC entity; or, a data volume of more than one PDCP entity; or, a data volume of more than one RLC entity; or, a sum of a data volume of more than one PDCP entity and a data volume of more than one RLC entity, as long as remaining times corresponding to these data volumes are within the remaining time period.

The above thresholds (values of the third predetermined threshold to the fifth predetermined threshold) and the predetermined numbers (the second predetermined number and the third predetermined number) may be preset or configured by a network device, the present disclosure does not make limitations on their values.

FIG. 6 is a schematic diagram of a MAC CE format of a delay information report in the above embodiments. As shown in FIG. 6, the length of the MAC CE of the delay information report may be fixed, and includes information on a remaining time period and information on its corresponding data volume to be reported.

FIG. 7 is another schematic diagram of a MAC CE format of a delay information report in the above embodiments. As shown in FIG. 7, the length of the MAC CE of the delay information report may be variable, also includes information on a remaining time period and information on its corresponding data volume to be reported, unlike the example in FIG. 6, whether a data volume corresponding to a remaining time period appears is indicated via a bitmap. For example, in a case where the MAC CE at most supports reporting data volumes of 8 remaining time periods, or a network device configures no more than 8 remaining time periods, the first byte of the MAC CE is a bitmap, Ti is an identifier of whether a data volume corresponding to a remaining time period which is present, if Ti=1, it represents that a data volume corresponding to the remaining time period is present afterwords, and if Ti=0, it represents that a data volume corresponding to the remaining time period is absent afterwords.

In the examples shown in FIG. 6 and FIG. 7, the number of bits occupied by the information on the remaining time period and the information on the data volume to be reported may be the same or may be different. For example, the information on the remaining time period occupies 3 bits, the information on the data volume to be reported occupies 5 bits; or, the information on the remaining time period and the information on the data volume to be reported occupy 8 bits respectively, and so on.

In the examples shown in FIG. 6 and FIG. 7, as described above, the data volume to be reported may further be a data volume of a PDU set corresponding to current minimum 1 to m2 remaining time periods (m2 may be 1 or a positive integer greater than 1, may be predefined or configured by a base station), or a data volume of a PDU set in which an upper limit of a remaining time period is lower than a threshold, or a data volume of a PDU set whose data volume is higher than a threshold, and so on.

In the embodiments of the present application, trigger of the delay information report may be at least one of the following conditions, i.e., a terminal equipment may transmit a delay information report to a network device in a case where at least one of the following conditions is met, these conditions include but are not limited to:
a remaining time of a PDU set at the PDCP layer of the terminal equipment is lower than a sixth predetermined threshold, or a minimum value of a remaining time of a PDU set at the PDCP layer of the terminal equipment is lower than a seventh predetermined threshold;
a remaining time of a PDU set at the RLC layer of the terminal equipment is lower than an eighth predetermined threshold, or a minimum value of a remaining time of a PDU set at the RLC layer of the terminal equipment is lower than a ninth predetermined threshold;
a minimum value in a remaining time of a PDU set at the PDCP layer of the terminal equipment and a remaining time of the PDU set at the RLC layer of the terminal equipment is lower than a tenth predetermined threshold;
uplink data is coming and the uplink data belongs to a logical channel, a PSDB corresponding to a PDU set included in the logical channel is lower than PSDBs corresponding to PDU sets included in other logical channels having data; and
a buffer time of a PDU set at the PDCP layer of the terminal equipment or a buffer time of a PDU set at the RLC layer of the terminal equipment exceeds an eleventh predetermined threshold.

The above thresholds (values of the sixth predetermined threshold to the eleventh predetermined threshold) may be preset or configured by a network device, the present disclosure does not make limitations on their values.

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

According to the method in the embodiments of the present disclosure, a terminal equipment determines a remaining time to be reported, and timely triggers a delay information report containing the remaining time to be reported, which helps the terminal equipment to timely transmit the delay information report to the network device, in addition, the network device may timely allocate appropriate uplink resources for transmission of an XR service according to contents of the delay information report, which helps meeting latency requirements of the XR services, thereby ensuring QoS of the XR service, and may further improve a utilization rate of a wireless resource.

### Embodiments of a second aspect

Embodiments of the present disclosure provide a configuration method, which is described from a network device side. The contents same as the embodiments of the first aspect are not repeated again.

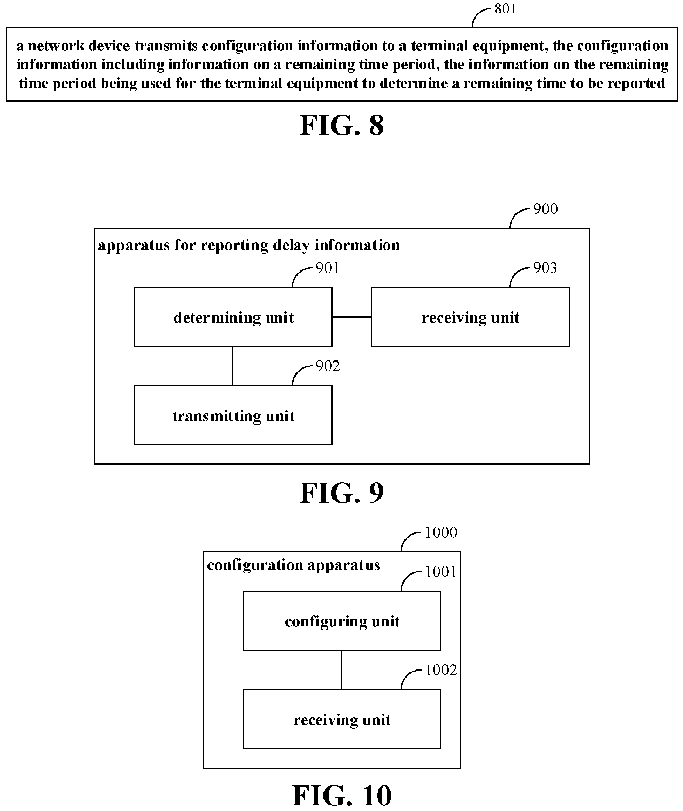

FIG. 8 is a schematic diagram of a configuration method in the embodiments of the present disclosure. As shown in FIG. 8, the method includes:
801: a network device transmits configuration information to a terminal equipment, the configuration information including information on a remaining time period, the information on the remaining time period being used for the terminal equipment to determine a remaining time to be reported.

In some embodiments, the information on the remaining time period includes a range of the remaining time period and an identifier or index of the remaining time period. The following Table 2 is an example of the information on the remaining time period. The following Table 3 is another example of the information on the remaining time period. The present disclosure is not limited to these.

**Table 2**

| Index of a remaining time period | Lower limit of a remaining time | Upper limit of a remaining time |
|---|---|---|
| 0 | 0 ms | 2 ms |
| 1 | 2 ms | 5 ms |
| 2 | 5ms | 10 ms |
| 3 | 10 ms | 20 ms |
| 4 | 20 ms | 50 ms |
| 5 | 50 ms | 100 ms |
| 6 | 100ms | 200 ms |
| 7 | 200 ms | none |

**Table 3**

| Index of a remaining time period | Starting point of a remaining time | Length of a remaining time |
|---|---|---|
| 0 | 0 ms | 2 ms |
| 1 | 2 ms | 3 ms |
| 2 | 5ms | 5 ms |
| 3 | 10 ms | 10 ms |
| 4 | 20 ms | 30 ms |
| 5 | 50 ms | 50 ms |
| 6 | 100ms | 100 ms |
| 7 | 200 ms | none |

In some embodiments, the configuration information further includes a predetermined threshold configured by the network device for the terminal equipment, such as the first predetermined threshold to the eleventh predetermined threshold as described in the embodiments of the first aspect, and so on. The present disclosure is not limited to this, as described above, the first predetermined threshold to the eleventh predetermined threshold may further be predefined, for example are specified in the specification, or are defined before a product leaves a factory, and so on.

In some embodiments, the configuration information further includes a predetermined number configured by the network device for the terminal equipment, such as the first predetermined number (e.g. m1) and the second predetermined number (e.g. m2) and the third predetermined number as described in the embodiments of the first aspect, and so on. The present disclosure is not limited to this, as described above, the first predetermined number and the second predetermined number may further be predefined, for example are specified in the specification, or are defined before a product leaves a factory, and so on.

In the embodiments of the present disclosure, the configuration information may be included in system information, or in a radio resource control (RRC) reconfiguration message, or in an RRC setup message, or in an RRC resume message, or in an RRC re-establishment message, etc., the present disclosure does not make limitations in this regard.

In some embodiments, the network device may further receive information from the terminal equipment, such as the aforementioned delay information report, etc.

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

According to the method in the embodiments of the present disclosure, a network device configures information on a remaining time period for a terminal equipment, the terminal equipment thereby may determine a remaining time to be reported, and timely triggers a delay information report containing the remaining time to be reported, which helps the terminal equipment to timely transmit the delay information report to the network device, in addition, the network device may timely allocate appropriate uplink resources for transmission of an XR service according to contents of the delay information report, which helps meeting latency requirements of the XR services, thereby ensuring QoS of the XR service, and may further improve a utilization rate of a wireless resource.

### Embodiments of a third aspect

Embodiments of the present disclosure provide an apparatus for reporting delay information. The apparatus may, for example, be a terminal equipment, or may be one or more parts or components configured in the terminal equipment. The apparatus in the embodiments of the present disclosure corresponds to the method in the embodiments of the first aspect, the contents same as those in the embodiments of the first aspect are not repeated.

FIG. 9 is a schematic diagram of an example of an apparatus for reporting delay information in the embodiments of the present disclosure. As shown in FIG. 9, the apparatus 900 for reporting delay information in the embodiments of the present disclosure includes:
a determining unit 901 configured to determine a remaining time to be reported; and
a transmitting unit 902 configured to transmit a delay information report to a network device, the delay information report including the remaining time to be reported.

In some embodiments, that the determining unit 901 determines the remaining time to be reported includes:
a MAC layer determines the remaining time to be reported according to a remaining time of a PDCP layer and/or a remaining time of an RLC layer.

In the above embodiment, The PDCP layer may notify the MAC layer of the remaining time of the PDCP layer.

In the above embodiment, The RLC layer may notify the MAC layer of the remaining time of the RLC layer.

In the above embodiment, The PDCP layer may further notify the RLC layer of the remaining time of the PDCP layer.

In the above embodiment, the remaining time of the PDCP layer and/or the remaining time of the RLC layer is(are) a remaining time of a PDU set at the PDCP layer and/or a remaining time of the PDU set at the RLC layer.

In some embodiments, the remaining time to be reported refers to at least one of the following:
a remaining time of the PDCP layer of the terminal equipment;
a remaining time of the RLC layer of the terminal equipment;
a minimum value in the remaining time of the PDCP layer of the terminal equipment and the remaining time of the RLC layer of the terminal equipment;
an identifier or index of a remaining time period;
a minimum value in remaining times of PDU sets included in a logical channel at the PDCP layer of the terminal equipment; and
a minimum value in remaining times of PDU sets included in a logical channel at the RLC layer of the terminal equipment.

In some embodiments, the determining unit 901 further determines a data volume to be reported corresponding to the remaining time to be reported, and the delay information report further includes the data volume to be reported.

In the above embodiments, that the determining unit 901 determines the data volume to be reported includes:
a MAC layer determines the data volume to be reported according to a data volume of the PDCP layer and/or a data volume of the RLC layer.

In the above embodiment, The PDCP layer may notify the MAC layer of the data volume of the PDCP layer.

In the above embodiment, The RLC layer may notify the MAC layer of the data volume of the RLC layer.

In the above embodiment, the data volume to be reported is a data volume of at least one PDU set corresponding to at least one remaining time period.

In some embodiments, as shown in FIG. 9, the apparatus 900 further includes:
a receiving unit 903 configured to receive configuration information transmitted by a network device, the configuration information including an index of at least one remaining time period and its corresponding time period range.

In the above embodiment, the determining unit 901 (the PDCP layer and/or RLC layer of the terminal equipment) calculates a sum of data volumes of PDU sets within the at least one remaining time period as a data volume to be reported.

In some embodiments, the delay information report further includes an identifier or index of the at least one remaining time period.

In the above embodiment, the data volume to be reported may be one of the following:
a data volume of a PDCP entity;
a data volume of an RLC entity;
a sum of a data volume of a PDCP entity and a data volume of an RLC entity;
data volumes of more than one PDCP entity;
data volumes of more than one RLC entity; and
a sum of data volumes of more than one PDCP entity and data volumes of more than one RLC entity.

In some embodiments, the data volume to be reported is: a data volume of a PDU set corresponding to a second predetermined number of remaining time periods with lowest or highest identifiers or indices of remaining time periods associated with which there is data to be transmitted.

In some embodiments, the data volume to be reported is: a data volume of a PDU set having data to be transmitted with a lower limit or an upper limit of a remaining time period lower than a third predetermined threshold.

In some embodiments, the data volume to be reported is: a data volume of a PDU set having data to be transmitted with a data volume greater than a fourth predetermined threshold.

In some embodiments, the data volume to be reported is: a data volume of a PDU set corresponding to a third predetermined number of remaining time periods with lowest or highest identifiers or indices of remaining time periods.

In some embodiments, the data volume to be reported is: a data volume of a PDU set with a lower limit or an upper limit of a remaining time period lower than a fifth predetermined threshold.

In some embodiments, the delay information report further includes an identifier or index of a PDU set.

In the above embodiments, the remaining times to be reported and the data volumes to be reported may be sorted according to the identifiers or indices of the PDU sets in ascending order or in descending order.

In some embodiments, the data volume to be reported is: a data volume of a PDU set corresponding to a minimum first predetermined number of remaining times, in the remaining time of the PDCP layer of the terminal equipment and/or the remaining time of the RLC layer of the terminal equipment.

In some embodiments, the remaining time to be reported is: a remaining time of a PDCP layer and/or a remaining time of an RLC layer of a PDU set in which the remaining time of the PDCP layer of the terminal equipment and/or the remaining time of the RLC layer of the terminal equipment is(are) lower than a first predetermined threshold; the data volume to be reported is: a data volume of a PDCP layer and/or a data volume of an RLC layer corresponding to the remaining time of the PDCP layer and/or the remaining time of the RLC layer.

In some embodiments, the remaining time to be reported is: a remaining time of a PDCP layer and/or a remaining time of an RLC layer of a PDU set in which a data volume of the PDCP layer of the terminal equipment and/or a data volume of the RLC layer of the terminal equipment is(are) higher than a second predetermined threshold; the data volume to be reported is: a data volume of a PDCP layer and/or a data volume of an RLC layer corresponding to the remaining time of the PDCP layer and/or the remaining time of the RLC layer.

In some embodiments, the remaining time to be reported is: a remaining time of a PDCP layer and/or a remaining time of an RLC layer of a PDU set in which the PDCP layer has a data volume; the data volume to be reported is: a data volume of a PDCP layer and/or a data volume of an RLC layer corresponding to the remaining time of the PDCP layer and/or the remaining time of the RLC layer.

In the embodiments of the present application, the transmitting unit 902 may transmit a delay information report to a network device in a case where at least one of the following conditions is met:
a remaining time of a PDU set at the PDCP layer of the terminal equipment is lower than a sixth predetermined threshold, or a minimum value of a remaining time of a PDU set at the PDCP layer of the terminal equipment is lower than a seventh predetermined threshold;
a remaining time of a PDU set at the RLC layer of the terminal equipment is lower than an eighth predetermined threshold, or a minimum value of a remaining time of a PDU set at the RLC layer of the terminal equipment is lower than a ninth predetermined threshold;
a minimum value in a remaining time of a PDU set at the PDCP layer of the terminal equipment and a remaining time of the PDU set at the RLC layer of the terminal equipment is lower than a tenth predetermined threshold;
uplink data is coming and the uplink data belongs to a logical channel, a PSDB corresponding to a PDU set included in the logical channel is lower than PSDBs corresponding to PDU sets included in other logical channels having data; and
a buffer time of a PDU set at the PDCP layer of the terminal equipment or a buffer time of a PDU set at the RLC layer of the terminal equipment exceeds an eleventh predetermined threshold.

Embodiments of the present further disclosure provide a configuration apparatus. The apparatus may, for example, be a network device, or may be one or more parts or components configured in the network device. The apparatus in the embodiments of the present disclosure corresponds to the method in the embodiments of the second aspect, the contents same as those in the embodiments of the first and second aspect are not repeated.

FIG. 10 is a schematic diagram of an example of a configuration apparatus in the embodiments of the present disclosure. As shown in FIG. 10, the configuration apparatus1000 in the embodiments of the present disclosure includes:
a configuring unit 1001 configured to transmit configuration information to a terminal equipment, the configuration information including information on a remaining time period, the information on the remaining time period being used for the terminal equipment to determine a remaining time to be reported.

In some embodiments, the information on the remaining time period includes a range of the remaining time period and an identifier or index of the remaining time period.

In some embodiments, the configuration information further includes a predetermined threshold configured by the network device for the terminal equipment,

In some embodiments, the configuration information further includes a predetermined number configured by the network device for the terminal equipment.

In some embodiments, the configuration information is included in system information, or in an RRC reconfiguration message, or in an RRC setup message, or in an RRC resume message, or in an RRC re-establishment message.

In some embodiments, as shown in FIG. 10, the apparatus 1000 further includes:
a receiving unit 1002 configured to receive a delay information report transmitted by a terminal equipment. Contents about the delay information report have been described in the embodiments of the first aspect, are incorporated here, and are not repeated here.

The above text is only illustrative for the embodiments of the present disclosure, but the present disclosure is not limited to this, appropriate modifications can be also made based on the above each embodiment. For example, each of the above embodiments may be used individually, or one or more of the above embodiments may be combined.

It's worth noting that the above only describes components or modules related to the present disclosure, but the present disclosure is not limited to this. The apparatuses 900 and 1000 in the embodiments of the present disclosure may further include other components or modules. For detailed contents of these components or modules, relevant technologies can be referred to. Moreover, the above components or modules may be realized by a hardware facility such as a processor, a memory, a transmitter, a receiver, etc. The embodiments of the present disclosure have no limitation to this.

According to the embodiments of the present disclosure, the apparatuses are conducive to meeting latency requirements of the XR service, thereby ensuring QoS of the XR service, and may improve a utilization rate of a wireless resource.

### Embodiments of a fourth aspect

Embodiments of the present disclosure further provide a communication system, including a network device and a terminal equipment.

In the embodiments of the present disclosure, the terminal equipment includes the apparatus shown in FIG. 9 in the embodiments of the third aspect, configured to perform the method in the embodiments of the first aspect. Since the method has been described in details in the embodiments of the first aspect, its contents are incorporated here and are not repeated.

In the embodiments of the present disclosure, the network device includes the apparatus shown in FIG. 10 in the embodiments of the third aspect, configured to perform the method in the embodiments of the second aspect. Since the method has been described in details in the embodiments of the second aspect, its contents are incorporated here and are not repeated. In addition, the network device performs normal operations of the network device, and the network device may further perform operations corresponding to the operations of the terminal equipment, for example the network device receives information/signals from the terminal equipment, and/or the network device transmits information/signals to the terminal equipment, descriptions are omitted here.

Embodiments of the present disclosure further provide a terminal equipment, the terminal equipment for example may be a UE, but the present disclosure is not limited to this, it may also be other terminal equipment.

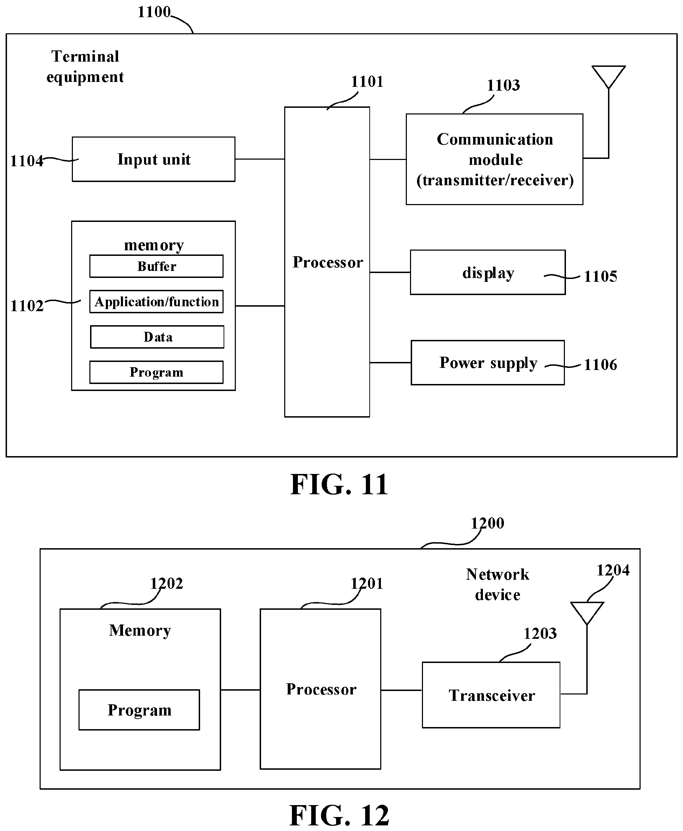

FIG. 11 is a schematic diagram of a terminal equipment in the embodiments of the present disclosure. As shown in FIG. 11, the terminal equipment 1100 may include a processor 1101 and a memory 1102; the memory 1102 stores data and programs, and is coupled to the processor 1101. It's worth noting that this figure is exemplary; other types of structures may also be used to supplement or replace this structure, so as to realize a telecommunication function or other functions.

In some embodiments, functions of the apparatus 900 in the embodiments of the third aspect may be integrated into the processor 1101, wherein the processor 1101 may be configured to execute a program to implement the method as described in the embodiments of the first aspect, the contents of which are incorporated herein and are not described repeatedly here.

In some other embodiments, the apparatus 900 in the embodiments of the third aspect may be configured separately from the processor 1101, for example the apparatus 900 in the embodiments of the third aspect may be configured as a chip connected to the processor 1101, functions of the apparatus 900 in the embodiments of the third aspect are realized through the control of the processor 1101.

As shown in FIG. 11, the terminal equipment 1100 may further include: a communication module 1103, an input unit 1104, a display 1105 and a power supply 1106. The functions of said components are similar to related arts, which are not repeated here. It's worth noting that the terminal equipment 1100 does not have to include all the components shown in FIG. 11, said components are not indispensable. Moreover, the terminal equipment 1100 may also include components not shown in FIG. 11, relevant technologies can be referred to.

Embodiments of the present disclosure further provide a network device, the network device for example may be a base station, but the present disclosure is not limited to this, it may also be other network device.

FIG. 12 is a composition schematic diagram of a network device in the embodiments of the present disclosure. As shown in FIG. 12, the network device 1200 may include: a processor 1201 and a memory 1202; the memory 1202 is coupled to the processor 1201. The memory 1202 may store various data; moreover, also stores a program for information processing, and executes the program under the control of the processor 1201.

In some embodiments, functions of the apparatus 1000 in the embodiments of the third aspect may be integrated into the processor 1201, wherein the processor 1201 may be configured to execute a program to implement the method as described in the embodiments of the second aspect, the contents of which are incorporated herein and are not described repeatedly here.

In some other embodiments, the apparatus 1000 in the embodiments of the third aspect may be configured separately from the processor 1201, for example the apparatus 1000 in the embodiments of the second aspect may be configured as a chip connected to the processor 1201, functions of the apparatus 1000 in the embodiments of the third aspect are realized through the control of the processor 1201.

In addition, as shown in FIG. 12, the network device 1200 may further include: transceivers 1203 and 1204. The functions of said components are similar to related arts, which are not repeated here. It's worth noting that the network device 1200 does not have to include all the components shown in FIG. 12. Moreover, the network device 1200 may also include components not shown in FIG. 12, relevant arts can be referred to.

Embodiments of the present disclosure further provide a computer program, wherein when a terminal equipment executes the program, the program enables the terminal equipment to execute the method described in the embodiments of the first aspect.

Embodiments of the present disclosure further provide a storage medium in which a computer program is stored, wherein the computer program enables a terminal equipment to execute the method described in the embodiments of the first aspect.

Embodiments of the present disclosure further provide a computer program, wherein when a network device executes the program, the program enables the network device to execute the method described in the embodiments of the second aspect.

Embodiments of the present disclosure further provide a storage medium in which a computer program is stored, wherein the computer program enables a network device to execute the method described in the embodiments of the second aspect.

The apparatus and method in the present disclosure may be realized by hardware, or may be realized by combining hardware with software. The present disclosure relates to such a computer readable program, when the program is executed by a logic component, the computer readable program enables the logic component to realize the device described in the above text or a constituent component, or enables the logic component to realize various methods or steps described in the above text. The present disclosure further relates to a storage medium storing the program, such as a hard disk, a magnetic disk, an optical disk, a DVD, a flash memory and the like.

By combining with the method/device described in the embodiments of the present disclosure, it may be directly reflected as hardware, a software executed by a processor, or a combination of the two. For example, one or more in the functional block diagram or one or more combinations in the functional block diagram as shown in the drawings may correspond to software modules of a computer program flow, and may also correspond to hardware modules. These software modules may respectively correspond to the steps as shown in the drawings. These hardware modules may be realized by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM or a storage medium in any other form as known in this field. A storage medium may be coupled to a processor, thereby enabling the processor to read information from the storage medium, and to write the information into the storage medium; or the storage medium may be a constituent part of the processor. The processor and the storage medium may be located in an ASIC. The software module may be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module may be stored in the MEGA-SIM card or the flash memory apparatus with a large capacity.

One or more in the functional block diagram or one or more combinations in the functional block diagram as described in the drawings may be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram or one or more combinations in the functional block diagram as described in the drawings may further be implemented as a combination of computer equipments, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art may make various variations and modifications to the present disclosure according to the principle of the present disclosure, these variations and modifications are also within the scope of the present disclosure.

As for the implementations including the above embodiments, the following supplements are further disclosed:
1. A method for reporting delay information, wherein the method comprises:
   a terminal equipment determines a remaining time to be reported; and
   the terminal equipment transmits a delay information report to a network device, the delay information report including the remaining time to be reported.
2. The method according to Supplement 1, wherein the method further comprises:
   the terminal equipment determines a data volume to be reported corresponding to the remaining time to be reported, and the delay information report further includes the data volume to be reported.
3. The method according to Supplement 1, wherein that the terminal equipment determines the remaining time to be reported comprises:
   a MAC layer of the terminal equipment determines the remaining time to be reported according to a remaining time of a PDCP layer and/or a remaining time of an RLC layer.
4. The method according to Supplement 3, wherein the method further comprises:
   the PDCP layer of the terminal equipment notifies the MAC layer of the remaining time of the PDCP layer.
5. The method according to Supplement 3, wherein the method further comprises:
   the RLC layer of the terminal equipment notifies the MAC layer of the remaining time of the RLC layer.
6. The method according to Supplement 2, wherein that the terminal equipment determines the data volume to be reported comprises:
   a MAC layer of the terminal equipment determines the data volume to be reported according to a data volume of the PDCP layer and/or a data volume of the RLC layer.
7. The method according to Supplement 6, wherein the method further comprises:
   the PDCP layer of the terminal equipment notifies the MAC layer of the data volume of the PDCP layer.
8. The method according to Supplement 6, wherein the method further comprises:
   the RLC layer of the terminal equipment notifies the MAC layer of the data volume of the RLC layer.
9. The method according to Supplement 3, wherein the method further comprises:
   the PDCP layer of the terminal equipment notifies the RLC layer of the remaining time of the PDCP layer.
10. The method according to Supplement 3, wherein
   the remaining time of the PDCP layer and/or the remaining time of the RLC layer is(are) a remaining time of a PDU set at the PDCP layer and/or a remaining time of the PDU set at the RLC layer.
11. The method according to Supplement 1, wherein the remaining time to be reported refers to at least one of the following:
   a remaining time of the PDCP layer of the terminal equipment;
   a remaining time of the RLC layer of the terminal equipment;
   a minimum value in the remaining time of the PDCP layer of the terminal equipment and the remaining time of the RLC layer of the terminal equipment;
   an identifier or index of a remaining time period;
   a minimum value in remaining times of PDU sets included in a logical channel at the PDCP layer of the terminal equipment; and
   a minimum value in remaining times of PDU sets included in a logical channel at the RLC layer of the terminal equipment.
12. The method according to Supplement 2, wherein the data volume to be reported is a data volume of at least one PDU set corresponding to at least one remaining time period.
13. The method according to Supplement 12, wherein the method further comprises:
   the terminal equipment receives configuration information transmitted by the network device, the configuration information including an index of at least one remaining time period and its corresponding time period range; and
   the PDCP layer and/or RLC layer of the terminal equipment calculates a sum of data volumes of PDU sets within the at least one remaining time period as the data volume to be reported.
14. The method according to Supplement 2, wherein the delay information report further comprises:
   an identifier or index of a PDU set.
15. The method according to Supplement 14, wherein the remaining times to be reported and the data volumes to be reported are sorted according to the identifiers or indices of the PDU sets in ascending order or in descending order.
16. The method according to Supplement 14, wherein
   the data volume to be reported is: a data volume of a PDU set corresponding to a minimum first predetermined number of remaining times, in the remaining time of the PDCP layer of the terminal equipment and/or the remaining time of the RLC layer of the terminal equipment; or,
   the remaining time to be reported is: a remaining time of a PDCP layer and/or a remaining time of an RLC layer of a PDU set in which the remaining time of the PDCP layer of the terminal equipment and/or the remaining time of the RLC layer of the terminal equipment is(are) lower than a first predetermined threshold; the data volume to be reported is: a data volume of the PDCP layer and/or a data volume of the RLC layer corresponding to the remaining time of the PDCP layer and/or the remaining time of the RLC layer; or,
   the remaining time to be reported is: a remaining time of a PDCP layer and/or a remaining time of an RLC layer of a PDU set in which a data volume of the PDCP layer of the terminal equipment and/or a data volume of the RLC layer of the terminal equipment is(are) higher than a second predetermined threshold; the data volume to be reported is: a data volume of the PDCP layer and/or a data volume of the RLC layer corresponding to the remaining time of the PDCP layer and/or the remaining time of the RLC layer; or
   the remaining time to be reported is: a remaining time of a PDCP layer and/or a remaining time of an RLC layer of a PDU set in which the PDCP layer of the terminal equipment has a data volume; the data volume to be reported is: a data volume of the PDCP layer and/or a data volume of the RLC layer corresponding to the remaining time of the PDCP layer and/or the remaining time of the RLC layer.
17. The method according to Supplement 12, wherein the delay information report further comprises:
   an identifier or index of the at least one remaining time period.
18. The method according to Supplement 17, wherein the data volume to be reported refers to one of the following:
   a data volume of a PDCP entity;
   a data volume of an RLC entity;
   a sum of a data volume of a PDCP entity and a data volume of an RLC entity;
   data volumes of more than one PDCP entity;
   data volumes of more than one RLC entity; and
   a sum of data volumes of more than one PDCP entity and data volumes of more than one RLC entity.
19. The method according to Supplement 17, wherein
   the data volume to be reported is: a data volume of a PDU set corresponding to a second predetermined number of remaining time periods with lowest or highest identifiers or indices of remaining time periods associated with which there is data to be transmitted; or,
   the data volume to be reported is: a data volume of a PDU set having data to be transmitted with an upper limit or an upper limit of a remaining time period lower than a third predetermined threshold; or,
   the data volume to be reported is: a data volume of a PDU set having data to be transmitted with a data volume greater than a fourth predetermined threshold; or,
   the data volume to be reported is: a data volume of a PDU set corresponding to a third predetermined number of remaining time periods with lowest or highest identifiers or indices of remaining time periods; or,
   the data volume to be reported is: a data volume of a PDU set with a lower limit or an upper limit of a remaining time period lower than a fifth predetermined threshold.
20. The method according to any one of Supplements 1-19, wherein the terminal equipment transmits the delay information report to the network device in a case where at least one of the following conditions is satisfied:
   a remaining time of a PDU set at the PDCP layer of the terminal equipment is lower than a sixth predetermined threshold, or a minimum value of a remaining time of a PDU set at the PDCP layer of the terminal equipment is lower than a seventh predetermined threshold;
   a remaining time of a PDU set at the RLC layer of the terminal equipment is lower than an eighth predetermined threshold, or a minimum value of a remaining time of a PDU set at the RLC layer of the terminal equipment is lower than a ninth predetermined threshold;
   a minimum value in a remaining time of a PDU set at the PDCP layer of the terminal equipment and a remaining time of the PDU set at the RLC layer of the terminal equipment is lower than a tenth predetermined threshold;
   uplink data is coming and the uplink data belongs to a logical channel, a PSDB corresponding to a PDU set included in the logical channel is lower than PSDBs corresponding to PDU sets included in other logical channels having data; and
   a buffer time of a PDU set at the PDCP layer of the terminal equipment or a buffer time of a PDU set at the RLC layer of the terminal equipment exceeds an eleventh predetermined threshold.
21. A configuration method, wherein the method comprises:
   a network device transmits configuration information to a terminal equipment, the configuration information including information on a remaining time period, the information on the remaining time period being used for the terminal equipment to determine a remaining time to be reported.
22. The method according to Supplement 21, wherein
   the information on the remaining time period includes a range of the remaining time period and an identifier or index of the remaining time period.
23. The method according to Supplement 21, wherein
   the configuration information further includes a predetermined threshold configured by the network device for the terminal equipment.
24. The method according to Supplement 21, wherein
   the configuration information further includes a predetermined number configured by the network device for the terminal equipment.
25. The method according to any one of Supplements 21-24, wherein
   the configuration information is included in system information, or in an RRC reconfiguration message, or in an RRC setup message, or in an RRC resume message, or in an RRC re-establishment message.
26. A terminal equipment, comprising a memory and a processor, the memory storing a computer program, and the processor being configured to execute the computer program to implement the method according to any one of Supplements 1 to 20.
27. A network device, comprising a memory and a processor, the memory storing a computer program, and the processor being configured to execute the computer program to implement the method according to any one of Supplements 21 to 25.
28. A communication system, comprising the network device according to Supplement 27 and the terminal equipment according to Supplement 26.

## Claims

1. An apparatus for reporting delay information, configured in a terminal equipment, wherein the apparatus comprises:
a determining unit configured to determine a remaining time to be reported; and
a transmitting unit configured to transmit a delay information report to a network device, the delay information report including the remaining time to be reported.

2. The apparatus according to claim 1, wherein,
the determining unit further determines a data volume to be reported corresponding to the remaining time to be reported, and the delay information report further includes the data volume to be reported.

3. The apparatus according to claim 1, wherein that the determining unit determines the remaining time to be reported comprises:
the determining unit determines the remaining time to be reported at a media access control layer of the terminal equipment according to a remaining time of a packet data convergence protocol layer and/or a remaining time of a radio link control layer.

4. The apparatus according to claim 3, wherein,
the packet data convergence protocol layer of the terminal equipment notifies the media access control layer of the remaining time of the packet data convergence protocol layer.

5. The apparatus according to claim 3, wherein,
the radio link control layer of the terminal equipment notifies the media access control layer of the remaining time of the radio link control layer.

6. The apparatus according to claim 2, wherein that the determining unit determines the data volume to be reported comprises:
the determining unit determines the data volume to be reported at the media access control layer of the terminal equipment according to a data volume of the packet data convergence protocol layer and/or a data volume of the radio link control layer.

7. The apparatus according to claim 6, wherein,
the packet data convergence protocol layer of the terminal equipment notifies the media access control layer of the data volume of the packet data convergence protocol layer.

8. The apparatus according to claim 6, wherein,
the radio link control layer of the terminal equipment notifies the media access control layer of the data volume of the radio link control layer.

9. The apparatus according to claim 3, wherein,
the packet data convergence protocol layer of the terminal equipment notifies the radio link control layer of the remaining time of the packet data convergence protocol layer.

10. The apparatus according to claim 3, wherein,
the remaining time of the packet data convergence protocol layer and/or the remaining time of the radio link control layer is/are a remaining time of a protocol data unit set at the packet data convergence protocol layer and/or a remaining time of the protocol data unit set at the radio link control layer.

11. The apparatus according to claim 1, wherein the remaining time to be reported refers to at least one of the following:
a remaining time of the packet data convergence protocol layer of the terminal equipment;
a remaining time of the radio link control layer of the terminal equipment;
a minimum value in the remaining time of the packet data convergence protocol layer of the terminal equipment and the remaining time of the radio link control layer of the terminal equipment;
an identifier or index of a remaining time period;
a minimum value in remaining times of protocol data unit sets included in a logical channel at the packet data convergence protocol layer of the terminal equipment; and
a minimum value in remaining times of protocol data unit sets included in a logical channel at the radio link control layer of the terminal equipment.

12. The apparatus according to claim 2, wherein the data volume to be reported is a data volume of at least one protocol data unit set corresponding to at least one remaining time period.

13. The apparatus according to claim 12, wherein the delay information report further comprises:
an identifier or index of the at least one remaining time period.

14. The apparatus according to claim 13, wherein,
the data volume to be reported is: a data volume of a protocol data unit set corresponding to a second predetermined number of remaining time periods with lowest or highest identifiers or indices of remaining time periods associated with which there is data to be transmitted; or,
the data volume to be reported is: a data volume of a protocol data unit set having data to be transmitted with an upper limit or an upper limit of a remaining time period lower than a third predetermined threshold; or,
the data volume to be reported is: a data volume of a protocol data unit set having data to be transmitted with a data volume greater than a fourth predetermined threshold; or,
the data volume to be reported is: a data volume of a protocol data unit set corresponding to a third predetermined number of remaining time periods with lowest or highest identifiers or indices of remaining time periods; or,
the data volume to be reported is: a data volume of a protocol data unit set with a lower limit or an upper limit of a remaining time period lower than a fifth predetermined threshold.

15. The apparatus according to claim 1, wherein the transmitting unit transmits the delay information report to the network device in a case where at least one of the following conditions is satisfied:
a remaining time of a protocol data unit set at the packet data convergence protocol layer of the terminal equipment is lower than a sixth predetermined threshold, or a minimum value of a remaining time of a protocol data unit set at the packet data convergence protocol layer of the terminal equipment is lower than a seventh predetermined threshold;
a remaining time of a protocol data unit set at the radio link control layer of the terminal equipment is lower than an eighth predetermined threshold, or a minimum value of a remaining time of a protocol data unit set at the radio link control layer of the terminal equipment is lower than a ninth predetermined threshold;
a minimum value in a remaining time of a protocol data unit set at the packet data convergence protocol layer of the terminal equipment and a remaining time of the protocol data unit set at the radio link control layer of the terminal equipment is lower than a tenth predetermined threshold;
uplink data is coming and the uplink data belongs to a logical channel, a protocol data unit set delay budget corresponding to a protocol data unit set included in the logical channel is lower than protocol data unit set delay budgets corresponding to protocol data unit sets included in other logical channels having data; and
a buffer time of a protocol data unit set at the packet data convergence protocol layer of the terminal equipment or a buffer time of the protocol data unit set at the radio link control layer of the terminal equipment exceeds an eleventh predetermined threshold.

16. A configuration apparatus, configured in a network device, wherein the apparatus comprises:
a transmitting unit configured to transmit configuration information to a terminal equipment, the configuration information including information on a remaining time period, the information on the remaining time period being used for the terminal equipment to determine a remaining time to be reported.

17. The apparatus according to claim 16, wherein,
the information on the remaining time period includes a range of the remaining time period and an identifier or index of the remaining time period.

18. The apparatus according to claim 16, wherein,
the configuration information further includes a predetermined threshold configured by the network device for the terminal equipment.

19. The apparatus according to claim 16, wherein,
the configuration information is contained in system information, or is contained in a radio resource control reconfiguration message, a radio resource control establishment message, a radio resource control recovery message, or a radio resource control reestablishment message.

20. A communication system, comprising a network device and a terminal equipment, wherein,
the terminal equipment is configured to determine a remaining time to be reported, and transmit a delay information report to the network device, the delay information report including the remaining time to be reported; and/or,
the network device is configured to transmit configuration information to the terminal equipment, the configuration information including information on a remaining time period, the information on the remaining time period being used for the terminal equipment to determine a remaining time to be reported.
